# EUROPEAN PATENT APPLICATION

(11) **EP 1 515 533 A2**
(43) Date of publication of application: **16.03.2005**
(21) Application number: 04020913.2
(22) Date of filing: 02.09.2004
(51) Int. Cl.: H04N 1/00

(54) **Film image processing apparatus and film image processing method**

(30) Priority: 08.09.2003 JP 2003314945
(71) Applicant: Noritsu Koki Co., Ltd., Wakayama City Wakayama, 640-8550 (JP)
(72) Inventor: Miyauchi, Mitsuru, Wakayama Prefecture (JP)
(74) Representative: Betten & Resch

(57) **Abstract**

A film image processing apparatus is provided comprising a light source for emitting the flux of light including a range of infrared ray wavelengths towards a particular type of film such as a mount type or a panoramic type, an infrared ray detector for detecting the transmitted components through the film of the flux of light emitted from the light source, and an error data detecting means for detecting an error data on the film from a profile of infrared ray intensity determined by the infrared ray detector. It also includes an infrared ray intensity correcting means provided with a lookup table for correcting the input/output characteristic in the infrared ray detector to a linear form and arranged to, when the input is not higher than a specific threshold level lower than the error detection threshold predetermined for the error data detecting means identifying the error on the film, convert the input to the output higher than the error detection threshold.

## Description

### BACKGROUND OF THE INVENTION

### (Field of the Invention)

The present invention relates to a film image processing method and a film image processing apparatus which comprises a light source for emitting a flux of light including a range of infrared ray wavelengths towards a film, an infrared ray detector for detecting transmitted components through the film of the flux of light emitted from the light source, and an error data detecting means for detecting an error data on the film from a profile of infrared ray intensity determined by the infrared ray detector.

### (Description of the Related Art)

Disclosed in Japanese Patent No. 2559970 are a method and an apparatus for image processing where any error derived from dirt or injury on a photographic film is detected from an image produced by a film scanner and then eliminated by the steps of image processing.

The prior art employs a combination of infrared ray energy and visible light energy which are emitted to the film of interest so that a profile of infrared ray energy representing the error on the film and a profile of visible light energy are measured referring to corresponding locations on the film. This is followed by removing the effect of the error from an image data scanned from the film, when the profile of infrared ray energy is greater than a predetermined threshold level at the location, the intensity of visible light energy is increased to a higher level enough to offset the profile of infrared ray energy at the location. When the profile of infrared ray energy is not greater than the predetermined threshold level, the profile of visible light energy at the location is corrected by a technique of interpolation.

The prior art may however fail to correct the error derived from injury or dirt on a mount-type film mounted on a slide mount or a photographic film which carries a mixture of standard size frames and panoramic size frames which are narrower in the width than the standard size frames.

A type of digital photographic printer apparatus has been developed and marketed, comprising a scanner unit for photo-electrically reading images from the film, an image input unit including an image processor for subjecting to the image processing where the images scanned with the scanner are processed with a predetermined algorithm to produce an output data of the images, and an image output unit for exposing a tape of printing paper to an optical form of the output image data received from the image input unit for recording or printing and subjecting the exposed printing paper to chemical development to produce photographic prints.

The image input unit described above is characterized by irradiating a flux of visible readout light emitted from a light source onto the film, focusing its projection mode carrying images from the film by a focusing lens onto an image sensor such as CCD where the images on the film are photo-electrically converted into image data, and processing the image data under the predetermined image processing conditions before delivering them to the image output unit.

In case that the digital photographic printer apparatus utilizes the known method for correcting the error in each image derived from dirt or injury on the film of mount-type, its reading action scans not only the film but also its slide mount. As a portion of the infrared ray is interrupted by the slide mount, its detected signal is decreased to a lower level in the intensity than the threshold level and thus regarded as the error, hence being subjected to the correcting action with the profile of visible light energy. As a result, the detection signal from the slide mount is corrected and converted to a grainy tanned image which is significantly different from the original. Since a variety of the slide mounts are provided in the size, they can hardly be specified by a single theory.

Also, the photographic film including a mixture of standard size frames and panoramic size frames which are narrower in the width than the standard size frames is commonly assisted with a light shielding plate used for shielding both ends of a frame from the exposure light to accurately scan a panoramic picture (See, for example, Japanese Unexamined Patent Publication (Heisei)1-127295). Such a light shielding plate is also scanned in the reading action. Equally, as the infrared ray is interrupted at both ends by the shielding plate, its detected signal is decreased to a lower level in the intensity than the threshold level and thus regarded as the error, hence being subjected to the correcting action with the profile of visible light energy.

### SUMMARY OF THE INVENTION

It is an object of the present invention, in view of the above drawbacks, to provide an apparatus and a method for the film image processing where errors in an image derived from dusts or injuries on a specific type of the film such as mount type film or panoramic film are readily detected and corrected.

For achievement of the above object, the film image processing apparatus according to the present invention is provided comprising the light source for emitting the flux of light including a range of infrared ray wavelengths towards the film, the infrared ray detector for detecting the transmitted components through the film of the flux of light emitted from the light source, the error data detecting means for detecting the error data on the film from the profile of infrared ray intensity determined by the infrared ray detector, and an effective image area detecting means for detecting an effective image area on the film, wherein the error data detecting means is arranged to detect the error data from the effective image area determined by the effective image area detecting means.

Preferably, the effective image area detecting means may be arranged to determine as the effective image area an area on the film of which the intensity of infrared ray determined by the infrared ray detector exceeds a specific threshold which is lower than the error detection threshold predetermined for identifying the error on the film.

The film image processing apparatus according to the present invention is provided comprising the light source for emitting the flux of light including a range of infrared ray wavelengths towards the film, the infrared ray detector for detecting the transmitted components through the film of the flux of light emitted from the light source, the error data detecting means for detecting the error data on the film from the profile of infrared ray intensity determined by the infrared ray detector, and an infrared ray intensity correcting means for correcting the input/output characteristic in the infrared ray detector, wherein the infrared ray intensity correcting means is arranged to remove areas other than the effective image area from the image area on the film to be examined by the error data detecting means.

Preferably, the infrared ray intensity correcting means may be arranged to, when the input is not higher than a specific threshold level lower than the error detection threshold predetermined for the error data detecting means identifying the error on the film, convert the input to an output higher than the error detection threshold.

Alternatively, the infrared ray intensity correcting means may be provided with a lookup table for correcting the input/output characteristic in the infrared ray detector to a linear form and arranged to, when the input is not higher than a specific threshold level lower than the error detection threshold predetermined for the error data detecting means identifying the error on the film, convert the input to the output higher than the error detection threshold.

Other features of the present invention will be apparent referring to the following preferred embodiments.

### BRIEF DESCRIPTION OF THE DRAWINGS

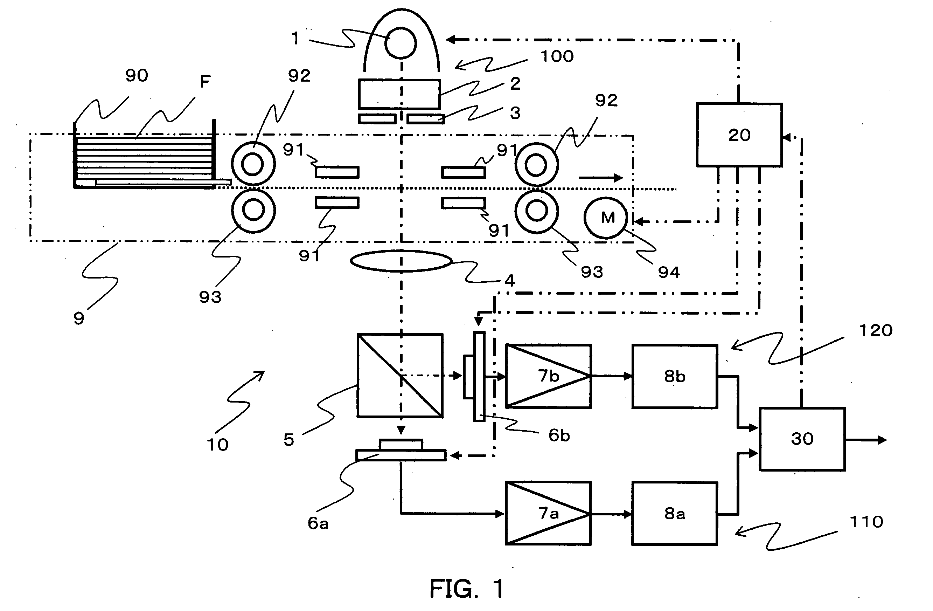

Fig. 1 is a schematic view of the film image processing apparatus;
Fig. 2 is a block diagram of the image processor;
Fig. 3A is an explanatory view of the mount type film mounted on the slide mount;
Fig. 3B is an explanatory diagram showing the profile of the infrared ray output;
Fig. 4A is an explanatory diagram showing the lookup table for correcting the common film;
Fig. 4B is an explanatory diagram showing the lookup table for correcting the mount type film;
Fig. 5 is a flowchart showing a procedure of correcting the error; and

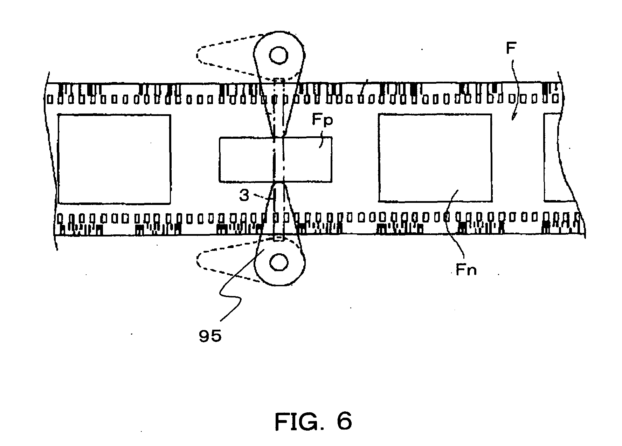

Fig. 6 is an explanatory view showing a primary part of another embodiment.

### DESCRIPTION OF THE PREFERRED EMBODIMENTS

The preferred embodiment of the film image processing apparatus according to the present invention will be described. The film image processing apparatus is designed for optoelectrically reading images from a film F one frame by one frame with the use of a solid-state imaging device such as a linear CCD sensor 6a and composed mainly of an image input unit 10, an image input controller 20 for controlling the image input action of the image input unit 10, and an image processor 30 for subjecting the data of images on the film received from the image input unit 10 to predetermined steps of the image processing.

The image input unit 10 comprises a light source 100 which is composed of a halogen lamp 1, a mirror tunnel 2 for diffusing the flux of light emitted from the halogen lamp 1, and a slit 3 for converting the flux of light into a slit of light aligned with the shorter width of a frame on the film F and arranged for emitting the flux of light including infrared rays to read out images, a focusing lens unit 4 for focusing the light of flux passed through the slit 3 and the film F, a dichroic prism 5, and a linear CCD sensor 6a provided with three light receivers for reading the images on the film F over the three, R(red), G(green), and B(blue), primary colors.

There are also provided an image data input means 110 including an amplifier circuit 7a for amplifying the output signal of the linear CCD sensor 6a and a 12-bit A/D converter 8a for sampling and holding the output of the amplifier circuit 7a for quantization, an infrared ray detector 120 including the focusing lens unit 4, the dichroic prism 5, an infrared ray linear CCD sensor 6b for detecting the infrared ray separated by the dichroic prism 5, an amplifier circuit 7b for amplifying the output signal of the infrared ray linear CCD sensor 6b, and a 12-bit A/D converter 8b for sampling and holding the output of the amplifier circuit 7b for quantization, and a film carrier 9 for automatically conveying films of different types including APS (advanced photo system) film, 135 negative roll film, and strip or slide film.

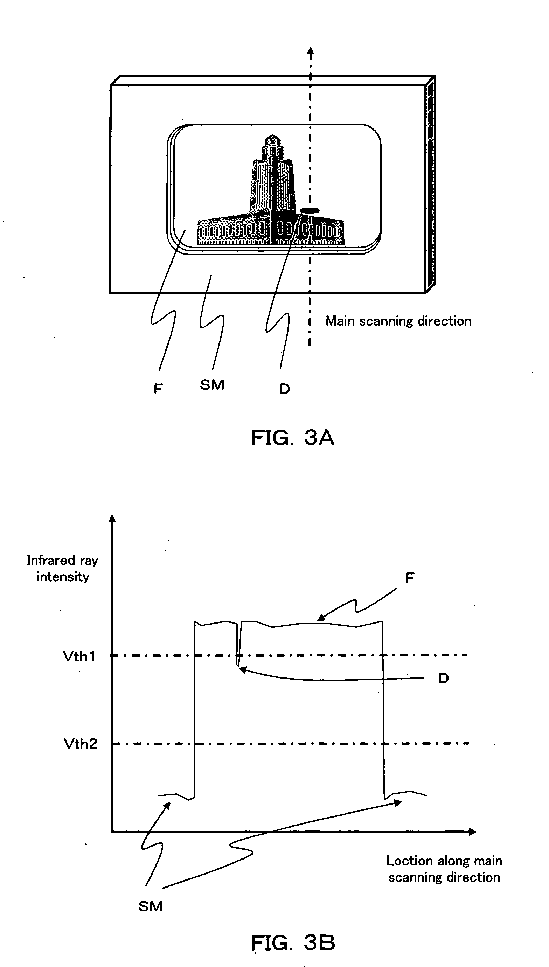

The film carrier 9 comprises a film storage 90 where, for example, a number of mount-type positive film slides F mounted on slide mounts SM such as shown in Fig. 3A are stored and released one by one, a pair of upper and lower rollers 92 and 93 for conveying the film F released from the above film storage 90 in the direction denoted by the arrow, a pulse motor 94 for driving the conveying rollers 92 and 93, and a negative masking 91 for positioning the film F.

The image input controller 20 is implemented by a CPU for controlling the switching on and off and the intensity of light of the light source 1, the action of the solid-state imaging devices 6a and 6b, the gain and offset level of the amplifier circuits 7a and 7b, and the action of the film carrier 9 for conveying the film F, ROMs for storing the programs for executing the actions, and RAMs for storing the relevant data. In action, the negative film F is scanned in the main scanning direction with the three, R, G, and B, light receives of the linear CCD sensor 6a aligned in a row along the widthwise direction of the film F for reading out images of interest and with the infrared ray linear CCD sensor 6b for detecting errors on the film F while being controllably conveyed in a direction orthogonal to the widthwise direction for scanning in the sub scanning direction by the action of film carrier 9 with the light source 1 being activated.

The image processor 30 is implemented by a CPU for the image processing, ROMs for storing the programs for the image processing, and RAMs for storing the image data as well as other data.

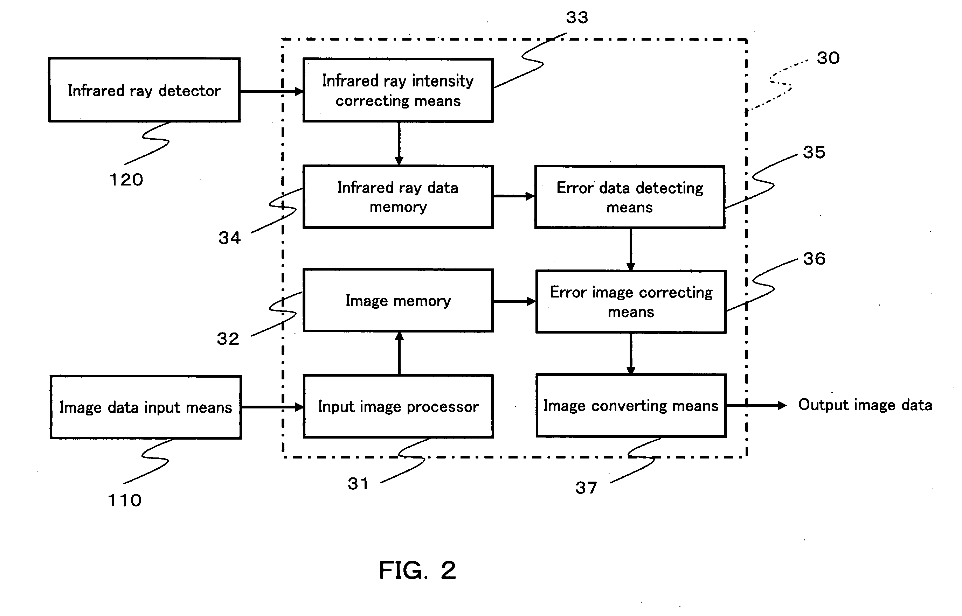

More specifically, as shown in Fig. 2, the image processor 30 comprises an input image processor 31 for shading correcting the image data of R, G, and B colors of a digital form produced by the A/D converter 8a in the image data input means 110, an image memory 32 where the image data processed by the input image processor 31 are stored, an infrared ray intensity correcting means 33 for shading correcting the infrared ray data of a digital form produced by the A/D converter 8b in the infrared ray detector 120 and also correcting the input/output characteristic in the infrared ray detector 120 to a linear form determined by the lookup table, an infrared ray data memory 34 where the corrected infrared ray data are stored, an error data detecting means 35 for detecting the error data from the profile of intensity profile of the infrared ray data stored in the infrared ray data memory 34, an image correcting means 36 for correcting the image data on the film received from the image data input means 110 in response to the error data from the error data detecting means 35, and an image converting means 37 for image processing the corrected image data on the film received from the image correcting means 36.

The image data from the image converting means 37 is then transferred as a final output data to the image output unit (not shown).

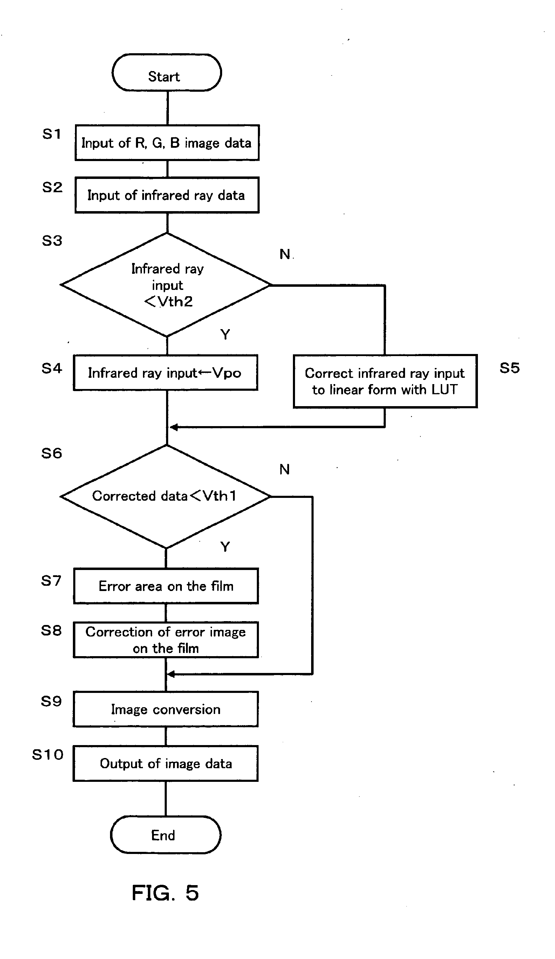

The foregoing procedure will now be explained in more detail referring to the flowchart of Fig. 5. The procedure starts with the image data of R, G, and B colors received from the image data input means 110, shading corrected by the input image processor 31, and saved in the image memory 32 (Step S1). Then, the infrared ray data received from the infrared ray detector 120 is shading corrected by the infrared ray intensity correcting means 33 (S2).

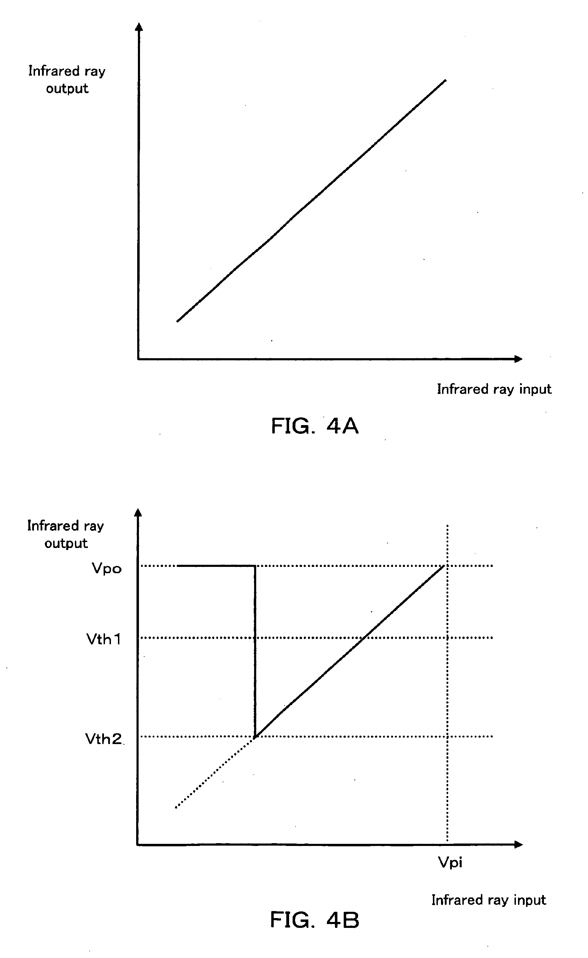

The lookup table of the infrared ray intensity correcting means 33 for correcting any distortion in the input/output characteristic of the infrared ray detector 120 or in the input of the infrared ray linear CCD sensor 6b to have a linear form shown in Fig. 4A includes an addition table data for, when the input is not higher than a specific threshold Vth2 which is lower than the error detection threshold Vth 1 used by the error data detecting means 35 for identifying the error, converting the input to a higher level than the error detection threshold Vth 1.

More particularly, when the film F of a mount type such as shown in Fig. 3A is fouled with dirt D, its infrared ray intensity data from scanning in the main scanning direction denoted by the one-dot chain line (subjected to the linear correction with the lookup table) has a profile shown in Fig. 3B. While the image data on the film F exhibits substantially a flat profile remaining higher than the error detection threshold Vth1, the dirt D is represented by a spike lower than the error detection threshold Vth1 and can thus be identified with ease.

However, as the slide mount SM shuts off the infrared ray approximately, it may be expressed by a signal lower than the error detection threshold Vth 1 and then judged as the error.

For compensation, the lookup table for correcting the signal to a linear form shown in Fig. 4Ais accompanied with an additional table data for, when the input is not higher than a specific threshold Vth2 which is lower than the error detection threshold Vth1 used by the error data detecting means 35 for identifying the error, converting the input or the signal representing the slide mount SM to a higher level than the error detection threshold Vth1, as shown in Fig. 4B. As a result, the signal representing the slide mount SM and excluding the effective image region of a frame of the film can be removed from the image data to be received and examined by the error data detecting means 35.

With the use of the lookup table, the infrared ray data input is corrected to a linear form when it is not lower than the specific threshold Vth2 (S3 and S5). When higher than the specific threshold Vth2, the infrared ray data output is increased to Vpo corresponding to the input Vpi (S3 and S4) before saved in the infrared ray data memory 34.

The two thresholds are not limited to the specified values, Vth1 and Vth2, and may favorably be determined through a series of experiments. It is noted that the infrared ray data to be stored in the infrared ray data memory 34 and the image data to be stored in the image memory 32 are equally addressed on the basis of frames on the film.

It is then examined by the error data detecting means 35 whether or not the infrared ray data of each frame received from the infrared ray data memory 34 is lower than the error detection threshold Vth1 (S6). When the infrared ray data is lower than the error detection threshold Vth1, it is judged that the error such as derived from the dirt D on the film shown in Fig. 3Ais present on the frame of the film (S7).

When the error data detecting means 35 judges that the frame has the error, the R(red), G(green), and B(blues) colors of the image data of the frame stored in the image memory 32 are respectively corrected at the location of the error by the action of the image correcting means 36 (S8).

More specifically, the R, G, and B colors of the image data at the location of the error are disturbed but not lost, their intensity levels are increased to the normal level by a degree determined from the infrared ray data. If any of the R, G, and B colors of the image data is completely lost, it can be provided through an interpolation technique using the neighbor pixel data. The correcting action may be selected from a variety of the known methods (e.g., disclosed in Japanese Patent No.2559970, the content of which are hereby incorporated by reference).

The error in the image data on the film received from the image data input means is identified and corrected by the image correcting means 36 responding to the error data from the error data detecting means 35. As a result, the image data carrying no error and improved in the quality can be obtained and utilized for having a highly definite print.

The image data having been subjected to the correcting action of the image correcting means 36 are transmitted to the image converting means 37 where they are subjected to the pre-printing process including color balance controlling, gradation controlling, and enlargement or reduction in the size (S9) and then received by the image output unit (S10).

Although the above embodiments are made for the image processing apparatus of a mount-type positive film mounted on the slide mount, the present invention may equally be applied to another type of the film F including a mixture of standard size frames Fn and panoramic frames Fp which are narrower in width than the standard size. In particular, a light shielding plate 95 is provided for shielding the unwanted portions, which define a panoramic image Fp, of a frame from the exposure light projected through the slit 3 in order to precisely read out data from the panoramic image Fp as it is moved forward and backward by the driving force of a motor in the film carrier. It is highly provable that the unwanted portions outside the panoramic image of the frame is judged as the error by the same reason as described above. This can equally be compensated by the correcting action of the infrared ray intensity correcting means 33 for removing the unwanted portions of the frame from the image data to be received by the error data detecting means. It is also understood that the error detection threshold Vth1 and the specific threshold Vth2 are favorably determined depending on the type of film such as negative or positive.

The intensity of the infrared ray received by the above-described infrared ray detector may be declined at the location of the error derived from dirt or injury to a lower level than the normal level of the image on the film. When the intensity of the infrared ray is lower than the error detection threshold predetermined, it is judged that the image carries the error. However, the sensitivity to the intensity of infrared ray may be varied from one detecting device to another.

It is hence preferred to correct the input/output characteristic in the infrared ray detector to a linear form, thus eliminating variations between the devices and improving the judgment at common use of the error data detecting means. In general, such correcting action is carried out using a lookup table. It is thus a good idea to add the lookup table with an addition table data designed for, when the input is not higher than a specific threshold which is lower than the error detection threshold used for identifying the error, converting the input to the output which is higher than the error detection threshold. As a result, the unwanted image area representing the slide mount or other shielded region of the film can favorably be removed from the image data to be processed by the error data detecting means examining the profile of infrared ray intensity.

In the above-described embodiment, the infrared ray is separated by the dichroic prism 5 from the flux of light emitted from the halogen lamp 1 and passed through the film F before received by the infrared ray linear CCD sensor 6b. The present invention is not limited to the embodiment and may be implemented with an arrangement where the flux of light passed through the film F is divided by four, R, G, B, and IR (infrared ray), filters and its divided components including the image data and the infrared ray data are examined by a single CCD area sensor.

In the above-described embodiment, the unwanted area outside the effective image on the film is removed from the image data to be examined by the error data detecting means by a combination of the infrared ray intensity correcting means employing a lookup table used for correcting the input/output characteristic in the infrared ray detector to a linear form and the error data detecting means converting the input, which is not higher than a specific threshold lower than the error detection threshold, to the output higher than the error detection threshold. It would be understood that the lookup table designed for correcting the input/output characteristic to a linear form is not mandatory so long as the input which is not higher than the specific threshold level lower than the error detection threshold used in the error data detecting means for identifying the error is successfully converted to the output higher than the error detection threshold. Using the lookup table for correcting the input/output characteristic to a linear form, the entire system can favorably be improved in the efficiency of the operation.

The infrared ray intensity detecting means is provided preferably for removing the unwanted area outside the effective area of a frame from the image data to be examined by the error data detecting means. For example, it may be arranged where as a region on the film other than the desired size and not detected in each of the R, G, and B components of the image data received from the image data input means 110 is judged as the unwanted image area, the area is removed from the image data to be transferred to the error data detecting means.

Moreover, an effective image area detecting means may additionally be provided for determining the effective image data on the film so that the unwanted area outside the effective image area determined by the effective image area detecting means can be removed by the error data detecting means.

Specifically, the effective image area may be detected when its infrared ray intensity determined by the infrared ray detector exceeds the specific threshold which is lower than the error detection threshold for identifying the error on the film. Alternatively, the effective image area may be determined other than the area which is greater than a desired size and not detected in any of the R, G, and B components of the image data received from the image data input means 110. In either case, the arrangement can be implemented by a CPU for image processing and its operating programs.

In this case, the effective image area on the film determined by the effective image area detecting means or the film image area excluding the slide mount area or the panoramic image excluding both, upper and lower, shielded areas is subjected to the error detecting action of the error data detecting means, whereby any error can efficiently be detected in the effective image area.

It is also true that the infrared ray intensity determined by the infrared ray detector remains lower at the location of the error derived from dirt or injury than that of a normal image area on the film. Hence, the error is identified when its infrared ray intensity is lower than the error detection threshold which has been determined in advance. Since the slide mount area and the shielded area for a panoramic image exhibit lower levels of the infrared ray intensity than the error detection threshold, the effective image area can be determined higher than the specific threshold which is lower than the error detection threshold.

In the above-described embodiment, the light source is provided with a halogen lamp for emitting the flux of light including a range of infrared ray wavelengths for the film. The light source is not limited to the halogen lamp and may employ any appropriate known light, such as LED or LED array, for emitting the light including a range of infrared ray.

As described above, the apparatus or method for film image processing according to the present invention can successfully detect and correct any error derived from injury or dirt on the film to be processed regardless of the types or sizes of image including a mount type and a panoramic type.

While the embodiment described above is illustrative for case of description of the present invention, it never intends to limit the scope of the present invention.

In summary an embodiment of the invention can be describe as follows:
A film image processing apparatus is provided comprising a light source for emitting the flux of light including a range of infrared ray wavelengths towards a particular type of film such as a mount type or a panoramic type, an infrared ray detector for detecting the transmitted components through the film of the flux of light emitted from the light source, and an error data detecting means for detecting an error data on the film from a profile of infrared ray intensity determined by the infrared ray detector. It also includes an infrared ray intensity correcting means provided with a lookup table for correcting the input/output characteristic in the infrared ray detector to a linear form and arranged to, when the input is not higher than a specific threshold level lower than the error detection threshold predetermined for the error data detecting means identifying the error on the film, convert the input to the output higher than the error detection threshold.

## Claims

1. A film image processing apparatus having a light source for emitting a flux of light including a range of infrared ray wavelengths towards a film, an infrared ray detector for detecting the transmitted components through the film of the flux of light emitted from the light source, and an error data detecting means for detecting an error data on the film from a profile of infrared ray intensity determined by the infrared ray detector, **characterized in that**
an effective image area detecting means for detecting an effective image area on the film is further provided so that the error data detecting means can detect the error data from the effective image area determined by the effective image area detecting means.

2. The film image processing apparatus according to claim 1, **characterized in that**
the effective image area detecting means is arranged to determine as the effective image area an area on the film of which the intensity of infrared ray determined by the infrared ray detector exceeds a specific threshold which is lower than the error detection threshold predetermined for identifying the error on the film.

3. A film image processing apparatus having a light source for emitting the flux of light including a range of infrared ray wavelengths towards the film, the infrared ray detector for detecting the transmitted components through the film of the flux of light emitted from the light source, and the error data detecting means for detecting the error data on the film from the profile of infrared ray intensity determined by the infrared ray detector, **characterized in that**
the infrared ray intensity correcting means for correcting the input/output characteristic in the infrared ray detector is further provided so that it can remove areas other than the effective image area from the image area on the film to be examined by the error data detecting means.

4. The film image processing apparatus according to claim 3, **characterized in that**
the infrared ray intensity correcting means is arranged to, when the input is not higher than a specific threshold level lower than the error detection threshold predetermined for the error data detecting means identifying the error on the film, convert the input to the output higher than the error detection threshold.

5. The film image processing apparatus according to claim 3, **characterized in that**
the infrared ray intensity correcting means is provided with a lookup table for correcting the input/output characteristic in the infrared ray detector to a linear form and arranged to, when the input is not higher than the specific threshold level lower than the error detection threshold predetermined for the error data detecting means identifying the error on the film, convert the input to the output higher than the error detection threshold.

6. The film image processing apparatus according to any of claims 1 to 5, **characterized by**:
the image data input means for inputting image data on the film; and
the image correcting means for correcting the image data received from the image data input means in response to the error data determined by the error data detecting means.

7. A film image processing method for emitting the flux of light including a range of infrared ray wavelengths towards the film and detecting the error data on the film from the profile of infrared ray intensity of the transmitted components through the film of the light, **characterized in that**
the effective image area on the film is detected and the error data is determined from the effective image area which has been detected.

8. The film image processing method according to claim 7, **characterized in that**
the area on the film of which the intensity of infrared ray passed through the film exceeds a specific threshold which is lower than the error detection threshold predetermined for identifying the error on the film is determined as the effective image area.

9. A film image processing method for emitting the flux of light including a range of infrared ray wavelengths towards the film and detecting the error data on the film from the profile of infrared ray intensity of the transmitted components through the film of the light, **characterized in that**
when the intensity of infrared ray passed through the film is not higher than the specific threshold level lower than the error detection threshold predetermined for identifying the error on the film, it is converted to the higher level than the error detection threshold and the error data on the film can be determined from the profile of the intensity which has been converted.

10. The film image processing method according to any of claims 7 to 9, **characterized in that**
the image data on the film is entered and corrected in response to the error data which has been detected.
